# EUROPÄISCHE PATENTANMELDUNG

(11) **EP 3 789 680 A1**
(43) Veröffentlichungstag der Anmeldung: **10.03.2021**
(21) Anmeldenummer: 20193591.3
(22) Anmeldetag: 31.08.2020
(51) Int. Cl.: F24C 15/20, B01D 46/00

(54) **FILTEREINHEIT UND DUNSTABZUGSVORRICHTUNG MIT FILTEREINHEIT**

(30) Priorität: 04.09.2019 EP 19290083
(71) Anmelder: BSH Hausgeräte GmbH, 81739 München (DE)
(72) Erfinder: Hydier, Priscilla, 67520 MARLENHEIM (FR); Methner, Lukas, 82544 Egling (DE); Chartrel, Aurélien, 67380 Lingolsheim (FR); Watrin, Gauthier, 68000 Colmar (FR); Laurent, Guillaume, 67870 Bischoffsheim (FR); Siefer, Marc, 67520 Marlenheim (FR)

(57) **Zusammenfassung**

Die vorliegende Erfindung betrifft eine Filtereinheit für eine Dunstabzugsvorrichtung, die zwei Filterelemente (11) und mindestens einen Trägerrahmen (10) für die Filterelement (11) und ein Filtergehäuse (14) aufweist und die Filterelemente (11) in einem spitzen Winkel zueinander angeordnet sind, Die Filtereinheit (1) ist dadurch gekennzeichnet, dass die Filterelemente (11) in dem Trägerrahmen (10) schwenkbar gelagert sind und die Filtereinheit (1) zumindest ein Positionierelement (12) zum Einstellen der Position zumindest eines der Filterelemente (11) in der Filtereinheit (1) aufweist.

## Beschreibung

Die vorliegende Erfindung betrifft eine Filtereinheit für eine Dunstabzugsvorrichtung und eine Dunstabzugsvorrichtung mit mindestens einer Filtereinheit.

Bei Dunstabzugsvorrichtungen, die zur Reinigung von verunreinigter Luft, insbesondere von Küchendünsten und Wrasen, verwendet werden, ist es bekannt, Filterelemente zu verwenden, durch die Fett und andere Verunreinigungen ausgefiltert werden. Die Filterelemente werden daher auch als Fettfilter bezeichnet.

Bei Dunstabzugshauben, die in der Regel an einer Raumwand oder Raumdecke montiert werden und bei denen die verunreinigte Luft daher nach oben in die Dunstabzugshaube eingesaugt wird, wird das Filterelement so in die Ansaugöffnung eingebaut, dass diese die Fläche der Ansaugöffnung abdeckt.

Bei Dunstabzugsvorrichtungen, die in oder neben einem Kochfeld installiert werden und die die verunreinigte Luft damit nach unten in die Dunstabzugsvorrichtung einsaugen, ist die zur Verfügung stehende Fläche für die Ansaugöffnung gering. Auch bei dieser Art von Dunstabzugsvorrichtung, die auch als Muldenlüfter oder Downdraft-Abzug bezeichnet werden kann, ist ebenfalls eine Verwendung von plattenförmigen Filterelementen bekannt. Um die Fläche des Filterelementes vergrößern zu können, ist es bekannt zwei Filterelemente zueinander in einem spitzen Winkel anzuordnen. Insbesondere bilden hierbei die Filterelemente eine V-Form. Die Filterelement sind dabei in einem Trägerrahmen gehalten, der in ein Filtergehäuse eingesetzt werden kann. Durch die V-förmige Anordnung der Filterelemente in der Filterelement auf kann ein besserer Luftstrom und eine bessere Fettfangrate erzielt werden. Solche Filtereinheiten werden beispielsweise in der Dunstabzugsvorrichtung Gaggenau VL200 120 und VL431 eingesetzt.

Eine Voraussetzung dafür, dass der Luftstrom verbessert werden kann und die Fettfangrate erhöht werden kann, ist, dass die Filterelement in der richtigen Orientierung in der Filtereinheit liegen.

Es ist daher Aufgabe der vorliegenden Erfindung eine Lösung zu schaffen, die auf einfache Weise eine gewünschte Ausrichtung zumindest eines Filterelementes in einer Filtereinheit erlaubt.

Gemäß einem ersten Aspekt wird die Aufgabe gelöst durch eine Filtereinheit für eine Dunstabzugsvorrichtung, die zwei Filterelemente und mindestens einen Trägerrahmen für die Filterelement und ein Filtergehäuse zur Aufnahme des Trägerrahmens aufweist und die Filterelemente zumindest zeitweise in einem spitzen Winkel zueinander angeordnet sind. Die Filtereinheit ist dadurch gekennzeichnet, dass die Filterelemente in dem Trägerrahmen schwenkbar gelagert sind und die Filtereinheit zumindest ein Positionierelement zum Einstellen der Position zumindest eines der Filterelement in der Filtereinheit aufweist

Als Filtereinheit für eine Dunstabzugsvorrichtung wird erfindungsgemäß eine bauliche Einheit bezeichnet, die an oder in eine Ansaugöffnung der Dunstabzugsvorrichtung eingesetzt werden kann und mittels derer die Luft von Verunreinigungen befreit werden kann. Zu diesem Zweck weist die Filtereinheit zwei Filterelemente auf. Jedes der Filterelemente stellt vorzugsweise ein längliches ebenes Element dar. Das Filterelement kann Filtermaterial aufweisen, das in einem Filterrahmen gehalten wird. Das Filtermaterial kann beispielsweise Streckmetalllagen, ein Vlies, ein Gestrick oder ein Gewirk sein. Insbesondere kann das Filtermaterial aus Draht bestehen. Zusätzlich zu den zwei Filterelementen weist die erfindungsgemäße Filtereinheit einen Trägerrahmen auf. Der Trägerrahmen dient zum Halten der Filterelemente in der Filtereinheit.

Der Trägerrahmen weist vorzugsweise einen Boden und zwei Seitenwände auf. Auf dem Boden werden die Filterelemente gehalten. Insbesondere werden die Filterelemente auf den Boden mit einem unteren Rand aufgesetzt. Die Seitenwände erstrecken sich von dem Boden des Trägerrahmens aus. Die Seitenwände erstrecken sich insbesondere nach oben.

Richtungsangaben, wie oben und unten beziehen sich, soweit nicht anders angegeben auf die Filtereinheit und deren Komponenten in einem in eine horizontal ausgerichtete Ansaugöffnung einer Dunstabzugsvorrichtung, die Luft über die Ansaugöffnung nach unten einsaugt, eingebrachten Zustand.

Die Filterelemente sind erfindungsgemäß in dem Trägerrahmen in einem spitzen Winkel zueinander angeordnet. Insbesondere bilden die Filterelemente eine V-Form. Durch diese Anordnung der Filterelemente zueinander kann die Filterfläche in dem insbesondere in Breitenrichtung begrenzten zur Verfügung stehenden Bauraum maximiert werden. Die Filterelement sind dabei so angeordnet, dass deren Abstand zueinander nach unten abnimmt.

Erfindungsgemäß sind die Filterelemente an dem Trägerrahmen schwenkbar gelagert. Vorzugsweise sind die Filterelement dabei so an dem Trägerrahmen gelagert, dass diese um deren Unterkanten, das heißt den Kanten, die den geringsten Abstand zueinander aufweisen, schwenkbar sind. Die Filterelement sind vorzugsweise so gelagert, dass der Winkel zwischen den Filterelementen vergrößert oder verkleinert werden kann.

Erfindungsgemäß weist die Filtereinheit zumindest ein Positionierelement auf. Das Positionierelement dient zum Einstellen der Position zumindest eines der Filterelement in der Filtereinheit.

Indem die Filterelemente schwenkbar an dem Trägerrahmen gelagert sind und insbesondere der Winkel zwischen den Filterelementen verändert werden kann, ist es möglich den Abstand zwischen den oberen Kanten der Filterelement zu verändern. Hierdurch kann ein geringerer Abstand eingestellt werden, um den Trägerrahmen und damit die Filterelement in eine Absaugöffnung der Dunstabzugsvorrichtung einzubringen. Zudem kann der Abstand zwischen den oberen Kanten nach dem Einführen des Trägerrahmens und der Filterelemente in die Dunstabzugsvorrichtung vergrößert werden. Das heißt die Filterelemente können insbesondere nach dem Einbringen in die Dunstabzugsvorrichtung auseinander geklappt werden. Hierdurch kann der Anströmwinkel, in dem die durch die Ansaugöffnung eingesaugte Luft die Filterelemente anströmt, verbessert werden. Indem zusätzlich zumindest ein Positionierelement in der Filtereinheit vorgesehen ist, kann die Einstellung der Position des zumindest einen Filterelementes beim Einbringen der Filtereinheit in die Dunstabzugsvorrichtung oder beim Entnehmen gezielt erfolgen.

Gemäß einer Ausführungsform dient das mindestens eine Positionierelement zum Bewegen mindestens eines der Filterelemente. Hierdurch ist es nicht erforderlich die Position manuell durch den Benutzer einzustellen. Das Positionierelement kann hierbei beispielswiese ein Vorsprung oder Stift an dem Gerätegehäuse oder Filtergehäuse sein, der auf Vorsprünge oder Laschen an dem Filterelement einwirkt und durch Hebelwirkung ein Verschwenken des Filterelementes bewirkt.

Zusätzlich oder alternativ kann das mindestens eine Positionierelement zum Fixieren der Position mindestens eines Filterelementes dienen. Insbesondere kann das Positionierelement das Filterelement in der eingestellten Position halten und insbesondere die relative Position des Filterelementes zu mindestens einem weiteren Bestandteil der Filtereinheit sicherstellen. Hierbei kann zumindest ein Positionierelement einen Magneten darstellen.

Vorzugsweise wirkt ein Positionierelement mit mindestens einem weiteren Positionierelement der Filtereinheit zusammen.

Gemäß einer Ausführungsform ist zumindest eines der Positionierelemente an dem Filterelement angeordnet. Das Positionierelement kann beispielsweise ein Fixierungselement zur temporären Fixierung des Filterelementes an dem Trägerrahmen oder zur Fixierung der Position des Filterelement an dem Trägerrahmen sein. Zusätzlich oder alternativ kann das Positionierelement, das an dem Trägerrahmen vorgesehen ist, zur gezielten Bewegung des Filterelementes relativ zu dem Trägerrahmen und dem Filtergehäuse dienen.

Gemäß einer weiteren Ausführungsform kann zusätzlich oder alternativ zumindest eines der Positionierelemente an dem Trägerrahmen angeordnet sein. Das Positionierelement kann hierbei zum Arretieren der Bewegung des Filterelementes bezüglich des Trägerrahmens dienen. Zusätzlich oder alternativ kann das Positionierelement zur Führung des Filterelementes relativ zu dem Trägerrahmen dienen.

Gemäß einer weiteren Ausführungsform kann zusätzlich oder alternativ zumindest eines der Positionierelemente an dem Filtergehäuse oder dem Gerätegehäuse angeordnet sein. Das Positionierelement kann auch hierbei zum Bewegen des Filterelementes relativ zu dem Trägerrahmen oder zum Fixieren der Position des Filterelement relativ zu dem Trägerrahmen dienen.

Gemäß einer bevorzugten Ausführungsform stellt zumindest eines der Positionierelemente einen Magneten und zumindest eines der Positionierelemente ein magnetisierbares Element dar. Hierdurch kann eine temporäre Verbindung des Filterelementes mit dem Filtergehäuse erzeugt werden und/oder die Ausrichtung des Filterelementes an dem Trägerrahmen fixiert werden. Das magnetisierbare Element kann beispielsweise eine Stahlplatte sein.

Vorzugweise ist das magnetisierbare Element an dem Filterelement angeordnet und an dem Trägerrahmen und dem Filtergehäuse oder Gerätegehäuse ist jeweils ein Magnet angeordnet. Bei dieser Ausführungsform kann das Filterelement wahlweise an dem Trägerrahmen oder dem Filtergehäuse fixiert werden. Besonders bevorzugt ist das magnetisierbare Element im oberen Bereich des Filterelementes angeordnet. Hierdurch kann eine Schwenkbewegung des Filterelementes, das an der unteren Kante schwenkbar gelagert ist, zwischen einer zusammengeklappten und einer auseinandergeklappten Anordnung erfolgen.

Gemäß einer Ausführungsform ist das mindestens eine Positionierelement ein Gleitvorsprung, der am Boden des Trägerrahmens angeordnet ist, sich senkrecht zu der Länge des Trägerrahmens erstreckt und das Filterelement eine Einbuchtung aufweist, die mit dem Gleitvorsprung zusammenwirkt. Der Gleitvorsprung ragt hierbei von dem Boden des Trägerrahmens aus nach oben. Bei dieser Ausführungsform kann das Filterelement bei einer Schwenkbewegung geführt werden und dadurch ein Verkanten des Filterelementes verhindert werden. Zudem wird dadurch ein seitliches Verschieben des Filterelementes in dem Trägerrahmen verhindert.

Gemäß einer weiteren Ausführungsform dient das Positionierelement zum Auseinanderschwenken der Filterelemente. Als Auseinanderschwenken wird insbesondere ein Aufklappen der Filterelemente bezeichnet. Vorzugsweise ist bei dieser Ausführungsform ein Positionierelement eine Lasche an dem Filterelement und ein weiteres Positionierelement ein Stift an dem Filtergehäuse, der mit der Lasche in Kontakt gebracht werden kann. Besonders bevorzugt ist an jedem Filterelement eine Lasche vorgesehen, die dem zweiten Filterelement zugewandt ist, und der Stift ist so angeordnet, dass dieser mit beiden Laschen in Kontakt kommen kann. Der Stift erstreckt sich vorzugsweise von dem Boden des Filtergehäuses aus nach oben. Hierdurch kann durch ein Einführen des Trägerrahmens mit den daran gehaltenen Filterelementen der Stift mit den Laschen in Kontakt gelangen und diese dabei auseinanderdrücken.

Gemäß einer bevorzugten Ausführungsform erstreckt sich die Lasche zur schwenkbaren Lagerung des Filterelementes durch einen Schlitz in der Seitenwand des Trägerrahmens. Der Schlitz liegt dabei vorzugsweise parallel zu der Fläche der Seitenwand. Durch diese Ausgestaltung, bei der die Lasche sich über den Schlitz hinaus erstreckt, kann die Lasche sowohl zur schwenkbaren Lagerung als auch zum Auseinanderklappen der Filterelemente dienen.

Gemäß einer bevorzugten Ausführungsform ist an der Innenseite der Seitenwand mindestens ein Anschlag und ein trapezförmiger Vorsprung gebildet, zwischen denen eine Einführschiene zum Einschieben des Filterelementes von oben gebildet ist. Die Einführschiene verjüngt sich vorzugsweise nach unten. Bei dieser Ausführungsform kann der untere Teil der Außenseite des Rahmens des Filterelementes an dem Anschlag im aufgeklappten Zustand anliegen. Im zusammengeklappten Zustand kann die Innenseite des oberen Teils des Rahmens des Filterelementes an der geneigten Fläche des trapezförmigen Vorsprungs anliegen und zum Herausnehmen des Trägerrahmens mit den Filterelementen aus der Dunstabzugsvorrichtung an dem Vorsprung beispielsweise durch einen Magneten gehalten werden.

Gemäß einem weiteren Aspekt betrifft die Erfindung eine Dunstabzugsvorrichtung mit mindestens einer erfindungsgemäßen Filtereinheit.

Vorteile und Merkmale, die bezüglich der Filtereinheit beschrieben wurden und werden, gelten entsprechend für die Dunstabzugsvorrichtung und umgekehrt und werden gegebenenfalls nur einmalig beschrieben.

Gemäß einer bevorzugten Ausführungsform weist die Dunstabzugsvorrichtung eine Ansaugöffnung und ein unterhalb der Ansaugöffnung angeordnetes Gebläse auf, das Luft über die Ansaugöffnung nach unten absaugt, und die Filtereinheit ist in die Ansaugöffnung eingeführt. Diese Art der Dunstabzugsvorrichtung wird auch als Downdraft-Abzug oder Muldenlüftung bezeichnet.

Gemäß einer Ausführungsform weist die Dunstabzugsvorrichtung ein Gerätegehäuse für die Filtereinheit auf und die Filtereinheit kann in das Gerätegehäuse eingesetzt werden. Insbesondere kann der Trägerrahmen auf den Boden des Gerätegehäuses aufgesetzt und dadurch gehalten werden. Zusätzliche Halterungen an dem Trägerrahmen, die diesen beispielsweise in der Ansaugöffnung halten, sind dabei nicht notwendig.

Die Erfindung wird im Folgenden erneut unter Bezugnahme auf die beiliegenden Figuren erläutert.

Es zeigen:
- Figur 1:: eine schematische Perspektivansicht einer Ausführungsform der erfindungsgemäßen Dunstabzugsvorrichtung in Explosionsdarstellung;
- Figur 2:: eine schematische Perspektivansicht einer Ausführungsform der erfindungsgemäßen Filtereinheit;
- Figur 3:: eine schematische Perspektivansicht einer weiteren Ausführungsform der erfindungsgemäßen Filtereinheit;
- Figur 4:: eine schematische Perspektivansicht einer Ausführungsform eines Filterelementes einer erfindungsgemäßen Filtereinheit;
- Figur 5:: eine schematische Prinzipskizze der Anordnung von Filterelementen in einer Ausführungsform der erfindungsgemäßen Filtereinheit;
- Figur 6:: eine schematische Prinzipskizze der Anordnung von Filterelementen in einer weiteren Ausführungsform der erfindungsgemäßen Filtereinheit;
- Figur 7:: eine schematische Explosionsansicht einer Ausführungsform der erfindungsgemäßen Dunstabzugsvorrichtung;
- Figur 8:: eine schematische Perspektivansicht einer Ausführungsform der erfindungsgemäßen Filtereinheit in einer Dunstabzugsvorrichtung;
- Figur 9:: eine schematische Schnittansicht einer Ausführungsform der erfindungsgemäßen Filtereinheit in einem Einführzustand;
- Figur 10:: eine schematische Schnittansicht einer Ausführungsform der erfindungsgemäßen Filtereinheit in einem Betriebszustand;
- Figur 11:: eine schematische, perspektivische Schnittansicht einer Ausführungsform der erfindungsgemäßen Dunstabzugsvorrichtung in einem Einführzustand;
- Figur 12:: eine schematische, perspektivische Schnittansicht einer Ausführungsform der erfindungsgemäßen Dunstabzugsvorrichtung in einem Betriebszustand;
- Figur 13:: eine schematische Schnittansicht einer Ausführungsform der erfindungsgemäßen Dunstabzugsvorrichtung;
- Figur 14:: eine schematische Schnittansicht einer Ausführungsform der erfindungsgemäßen Filtereinheit;
- Figur 15:: eine schematische Detailansicht der Figur 14;
- Figur 16:: eine schematische, perspektivische Schnittansicht einer Ausführungsform der erfindungsgemäßen Dunstabzugsvorrichtung im Bereich der Filtereinheit; und
- Figur 17:: eine weitere schematische, perspektivische Schnittansicht einer Ausführungsform der erfindungsgemäßen Dunstabzugsvorrichtung nach Figur 16 im Bereich der Filtereinheit.

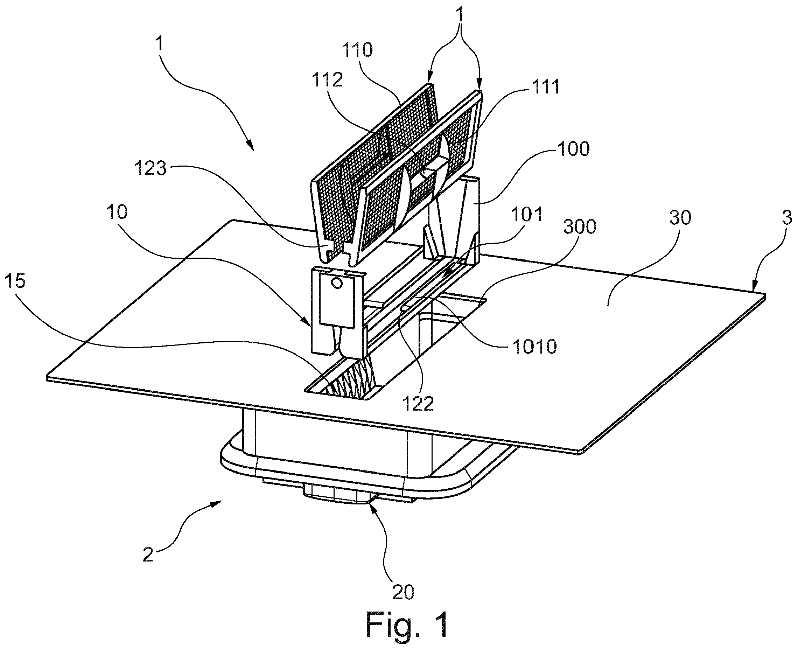

In Figur 1 ist eine Ausführungsform der Dunstabzugsvorrichtung 2 mit einer Filtereinheit 1 in Explosionsdarstellung gezeigt. Die Dunstabzugsvorrichtung 2 ist in einem Kochfeld 3 integriert. Das Kochfeld 3 weist eine Abdeckplatte 30 auf, die beispielsweise aus Glaskeramik besteht. In der Abdeckplatte 30 ist eine Aussparung 300 eingebracht. Unterhalb des Kochfeldes 3 ist ein Gebläse (nicht gezeigt) der Dunstabzugsvorrichtung 2 angeordnet. Die Dunstabzugsvorrichtung 2 weist ein Gerätegehäuse 20 auf, in das zumindest die Filtereinheit 1 aufgenommen ist.

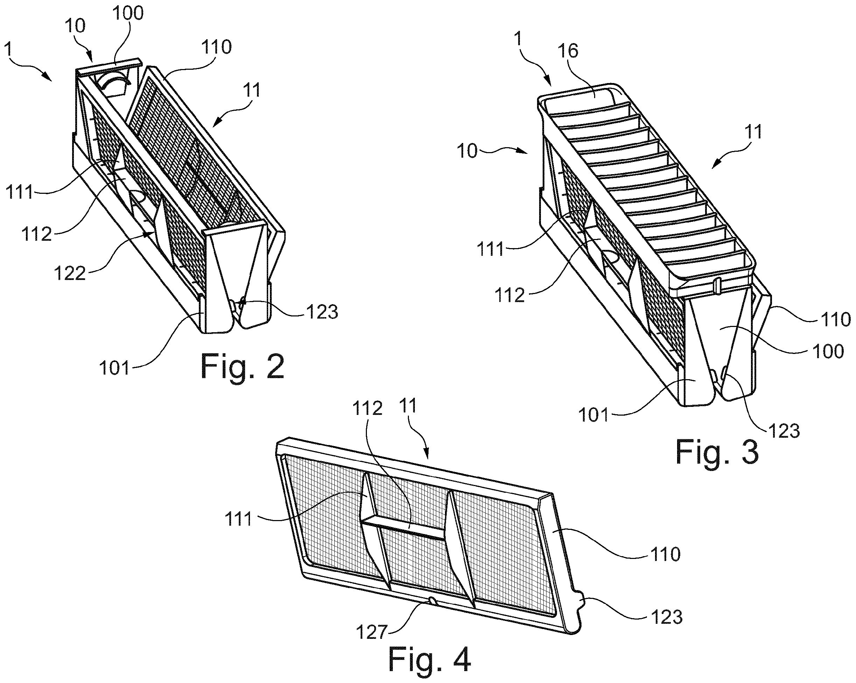

Die Filtereinheit 1 besteht aus einem Trägerrahmen 10 und zwei Filterelementen 11. Der Trägerrahmen 10 weist einen Boden 101 auf, an dessen Längsenden sich jeweils eine Seitenwand 100 nach oben erstreckt. Die Filterelemente 11 werden in dem Trägerrahmen 10 von oben eingeführt und stehen mit dem unteren Rand auf dem Boden 101 auf. Wie sich beispielsweise aus Figuren 2 und 3 ergibt, sind bei der gezeigten Ausführungsform Halteschienen 1010 in dem Boden 101 ausgebildet.

Die Filtereinheit 1 wird in die Ansaugöffnung 300 eingeführt. Vorzugsweise wird die Filtereinheit 1 soweit in die Ansaugöffnung 300 eingebracht, bis der Boden 101 auf dem Boden des Gerätegehäuses 20 aufsteht.

Der genauere Aufbau der Filtereinheit 1 ist in den Figuren 2 bis 4 gezeigt. Die Filterelemente 11 sind in der Filtereinheit 1 in dem Trägerrahmen 10 so gehalten, dass diese gemeinsam eine V-Form bilden. Insbesondere nimmt der Abstand zwischen den Filterelementen 11 nach unten ab. Die unteren Kanten der Filterelemente 11 stehen auf dem Boden 101 des Trägerrahmens 10 auf. Insbesondere sind die unteren Kanten in die Halteschienen 1010 des Bodens eingebracht. Der Boden 101 ist dabei einteilig aufgebaut und die Halteschienen 1010 sind voneinander durch eine Erhöhung voneinander getrennt.

An der Unterseite und den Seiten des Trägerrahmens 10 sind die Halteschienen 1010 voneinander durch eine Nut getrennt. Insbesondere ist in den Seitenwänden 100 des Trägerrahmens 10 jeweils eine Nut eingebracht, die sich in der Vertikalen erstreckt. Die Nut geht nach oben in eine sich nach oben aufweitende Vertiefung über. Diese Vertiefung wird auch als trapezförmige Vertiefung bezeichnet.

Das Filterelement 11 weist einen Rahmen 110 auf, der die Kanten des Filterelementes 11 umgibt. Zudem weist das Filterelement 11 in der gezeigten Ausführungsform zusätzlich zwei Stützstreben 111 auf, die sich in Höhenrichtung des Filterelementes 11 erstrecken. Zwischen den Stützstreben 111 ist eine senkrecht zu diesen Verlaufende Querstrebe 112 vorgesehen. Die Stützstreben 111 und Querstrebe 112 liegen in dem in den Trägerrahmen 10 eingebrachten Zustand auf der Seite des Filterelementes 11, die dem anderen Filterelement 11 abgewandt ist. Auf der gegenüberliegenden Seite sind an dem Rahmen 110 im unteren Bereich Laschen 123 vorgesehen. In der Figur 4 ist nur eine der beiden Laschen 123 des Filterelementes 11 sichtbar.

An der trapezförmigen Vertiefung in der Seitenwand 100 des Trägerrahmen 10 sind im unteren Bereich sich gegenüberliegende Schlitze (nicht sichtbar) vorgesehen. Die Schlitze sind so bemessen und positioniert, dass die Laschen 123 des Filterelementes 11 durch diese von außen nach innen hindurchgeführt werden können. Die Laschen 123 weisen dabei eine Länge auf, die größer als die Dicke des Schlitzes ist. Hierdurch ragen die Laschen 123 durch die Schlitze in die trapezförmige Vertiefung, wie in Figur 3 gezeigt ist.

In der Unterseite des Rahmens 110 des Filterelementes 11 ist in der Mitte eine Einbuchtung 127 vorgesehen, die sich in Dickenrichtung des Filterelementes 11 erstreckt. Auf dem Boden 101 des Trägerrahmens 10 ist, wie in Figur 1 gezeigt, ein Gleitvorsprung 122 vorgesehen, der sich senkrecht zu der Länge des Trägerrahmens 10 also parallel zu den Seitenwänden 10 in der Mitte des Bodens 101 erstreckt. In dem Zustand, in dem das Filterelement 11 in den Trägerrahmen 10 eingebracht ist, greift der Gleitvorsprung 122 in die Einbuchtung 127 des Rahmens 110 des Filterelementes 11 ein.

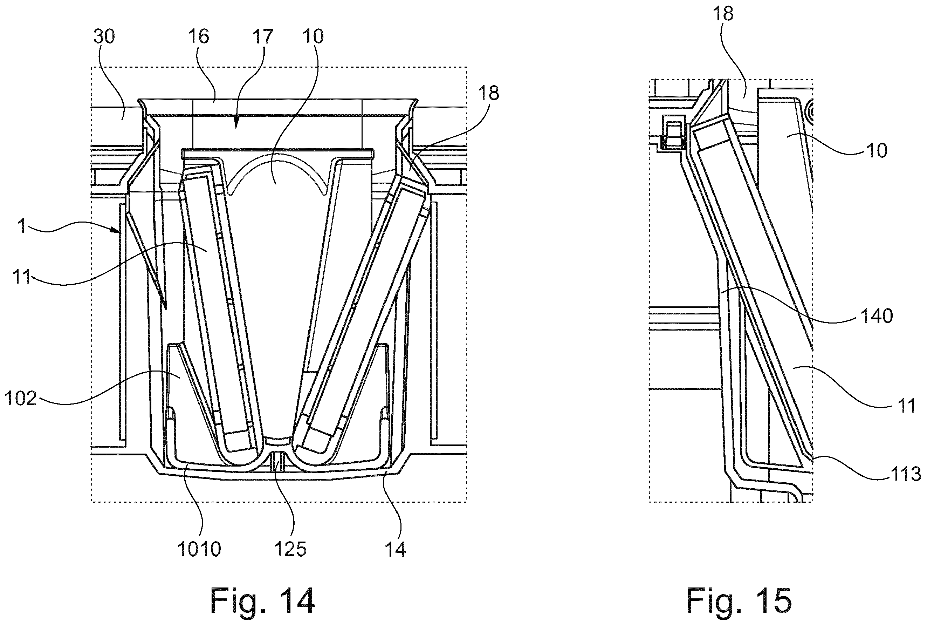

An der Innenseite der Seitenwände 100 des Trägerrahmens 10 ist durch die trapezförmige Vertiefung in der Außenseite ein trapezförmiger Vorsprung im oberen Bereich gebildet (siehe auch Figur 14). Im unteren Bereich sind an der Innenseite der Seitenwand Anschläge 102 (siehe Figur 14) ausgebildet. Die Anschläge 102 sind so ausgebildet, dass diese eine Schräge umfassen, die sich vom Boden 101 des Trägerrahmens 10 aus nach oben und außen erstrecken. Zwischen dem trapezförmigen Vorsprung und dem Anschlag 102 wird dadurch jeweils eine Einführschiene gebildet, die sich nach unten verjüngt. Die Breite der Einführschiene am unteren Ende entspricht der Dicke des Rahmens 110 des Filterelementes 11 an dessen unteren Kante.

Wird das Filterelement 11 in den Trägerrahmen 10 eingebracht, so wird dieses von oben in die Einführschiene, das heißt zwischen den trapezförmigen Vorsprung und den Anschlag mit der unteren Kante eingeschoben. Sobald die Lasche 123 des Filterelementes 11 auf die Höhe des Schlitzes in der trapezförmigen Vertiefung gelangt, wird die Lasche 123 in den Schlitz eingeführt. Hierdurch ist das Filterelement 11 in dem Trägerrahmen 10 schwenkbar gehalten. In Figur 2 ist das rechte Filterelement 11 in einem ausgeschwenkten und das linke Filterelement 11 in einem eingeschwenkten Zustand gezeigt. In dem ausgeschwenkten Zustand liegt der untere Teil der Außenseite des Rahmens 110 des Filterelementes an dem Anschlag 102 an. In dem eingeschwenkten Zustand liegt die Innenseite des Rahmens 110 des Filterelement 11 an dem trapezförmigen Vorsprung an. In der Figur 3 ist der Trägerrahmen 10 mit den Filterelementen 11 und einem die Filterelemente 11 nach oben abdeckenden Schutzgitter 16 gezeigt.

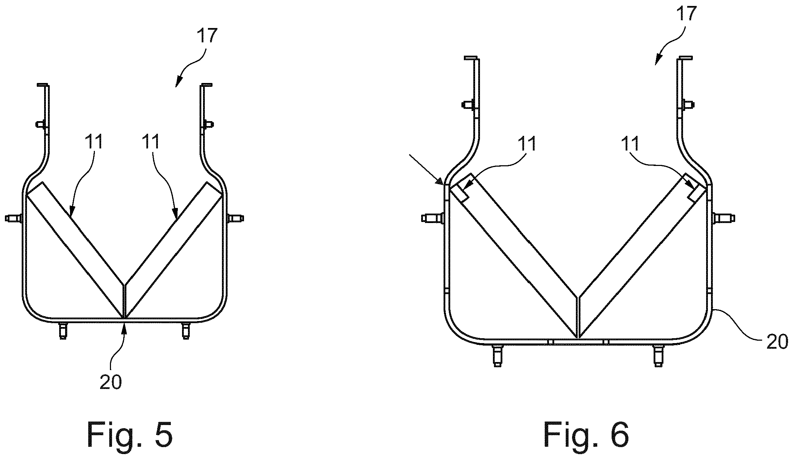

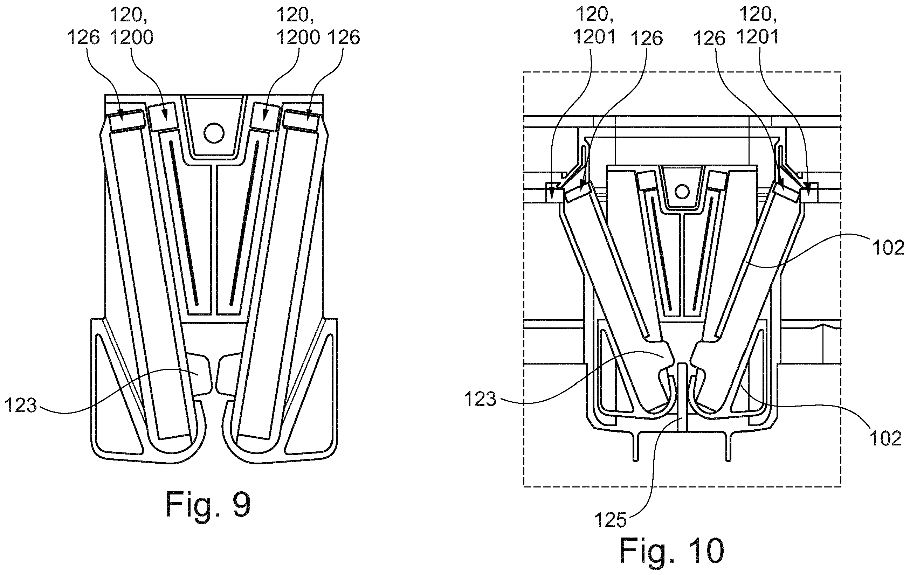

In den Figuren 5 und 6 sind zwei Ausführungsformen der Filtereinheit 1 schematisch gezeigt. Wie aus diesen schematischen Ansichten ersichtlich ist, sind die Filterelement 11 vorzugsweise so dimensioniert, dass diese im auseinander geschwenkten Zustand eine größere Breite als die Ansaugöffnung der Dunstabzugsvorrichtung 2 aufweisen. In der Figur 6 ist eine Ausführungsform gezeigt, bei der an den oberen Enden der Filterelemente 11 magnetisierbare Elemente 126 und an dem Gerätegehäuse 20, in das die Filtereinheit 1 aufgenommen wird, sind Magneten 1200 angeordnet. Hierdurch können die Filterelemente 11 in die auseinander geschwenkte Position gezogen werden, was später unter Bezugnahme auf die Figuren 9 und 10 genauer beschrieben wird.

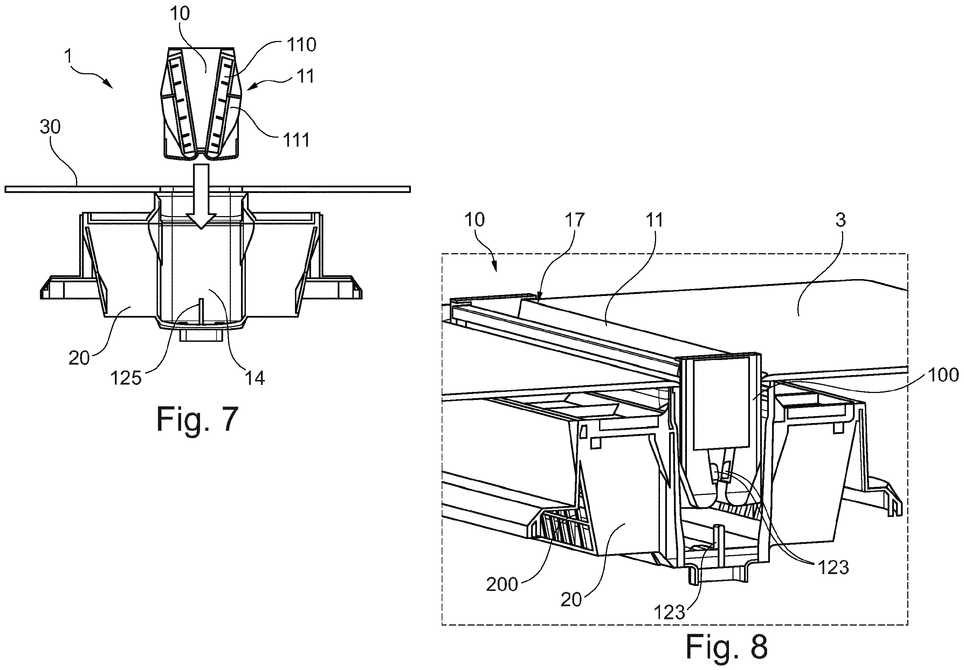

In Figur 7 und Figur 8 ist gezeigt, wie eine Ausführungsform des Trägerrahmens 10 mit Filterelementen 11 in ein Filtergehäuse 14, das in einem Gerätegehäuse 20 vorgesehen ist, eingebracht werden kann. In dem in Figur 7 gezeigten Zustand sind die Filterelemente 11 in dem Trägerrahmen 10 zusammengeklappt. Hierbei ragen auf beiden Seiten des Trägerrahmens 10 lediglich ein mittlerer Teil der Stützstreben 111 über den Trägerrahmen 10 hinaus. Die Stützstreben weisen bei dieser Ausführungsform in der Mitte deren Höhe eine größere Länge auf als im oberen und unteren Bereich. Das Filtergehäuse 14, das unterhalb der Abdeckplatte 30 des Kochfeldes 3 angeordnet ist, weist an den Seiten im oberen Bereich Ausbuchtungen auf. Im unteren Bereich, das heißt vom Boden des Filtergehäuses 14 oder des Gerätegehäuses 20, erstreckt sich an den Längsenden des Filtergehäuses 14 jeweils ein Stift 125 nach oben. Der Stift 125 ist in der Mitte der Breite des Filtergehäuses 14 angeordnet. Bein Einführen des Trägerrahmens 10 mit den Filterelementen 11 in das Filtergehäuse 14 wird der Stift 125 in die Nut an dem unteren Teil der Seitenwand 100 des Trägerrahmens 10 eingeführt. Der Stift 125 weist eine solche Höhe und Breite auf, dass dieser mit den Laschen 123 des Filterelementes 11 in Kontakt kommt und diese auseinander drückt. Hierdurch werden die Filterelemente 11 auseinander geschwenkt.

In den Figuren 9 und 10 ist eine Ausführungsform der Filtereinheit 1 gezeigt, bei der die Positionierelemente 12 Magneten 120 und magnetisierbare Elemente 126 darstellen. In der gezeigten Ausführungsform ist am oberen Ende des Rahmens 110 jedes Filterelementes 11 jeweils ein magnetisierbares Element 126, beispielsweise in Form einer Stahlplatte an dem seitlichen Ende des Rahmens 110 vorgesehen. An dem oberen Ende des trapezförmigen Vorsprungs an der Seitenwand 100 des Trägerrahmens 10 ist jeweils auf der Seite, die den Filterelementen 11 zugewandt ist ein Magnet 1200 angeordnet. Zudem ist an dem Gerätegehäuse 20 im oberen Bereich an gegenüberliegenden Seiten der Ansaugöffnung 17 jeweils ein Magnet 1201 angeordnet, der dem Inneren des Gerätegehäuses 20 zugeordnet ist.

Bei dieser Ausführungsform werden die Filterelement 11 während des Einführens in die Ansaugöffnung 17 durch die Wechselwirkung zwischen dem magnetisierbaren Element 126 und dem Magneten 1200 an dem Trägerrahmen 10 in dem zusammengeklappten Zustand gehalten. Sobald die Unterseite des Trägerrahmens 10 in den Bereich des Stiftes 125 am Boden des Gerätegehäuses 20 gelangt, wird dieser in die Nut an der Außenseite der Seitenwand 10 geführt und gerät danach mit den Laschen 123 der Filterelemente 11 in Kontakt. Hierdurch werden die Filterelemente 11 auseinander geklappt und damit die Magnetverbindung zwischen dem magnetisierbaren Element 126 und dem Magneten 1200 an dem Trägerrahmen 10 aufgehoben. Um ein vollständiges Auseinanderklappen zu gewährleisten, gerät das magnetisierbare Element mit den Magneten 1201 an dem Gerätegehäuse 20 in Kontakt.

Die Ansaugöffnung 17 wird vorzugsweise durch eine Filterabdeckung 18 abgedeckt, auf die das Schutzgitter 16 aufgebracht sein kann (siehe auch Figur 14). Die Innenseite der Filterabdeckung 18 weist eine sich nach oben verjüngende Form auf. Hierdurch sind an der Innenseite der Filterabdeckung 18 geneigte Flächen gebildet. Wird der Trägerrahmen 10 mit den Filterelementen 11 aus der in Figur 10 gezeigten Position nach oben gezogen, gleiten die Oberseiten der Filterelemente 11 an den geneigten Flächen entlang und somit wird die Magnetverbindung zwischen dem magnetisierbaren Element 126 und dem Magneten 1201 an dem Gerätegehäuse 20 gelöst. Dadurch kann der Trägerrahmen 10 mit den Filterelementen 11 aus dem Gerätegehäuse 20 entnommen werden.

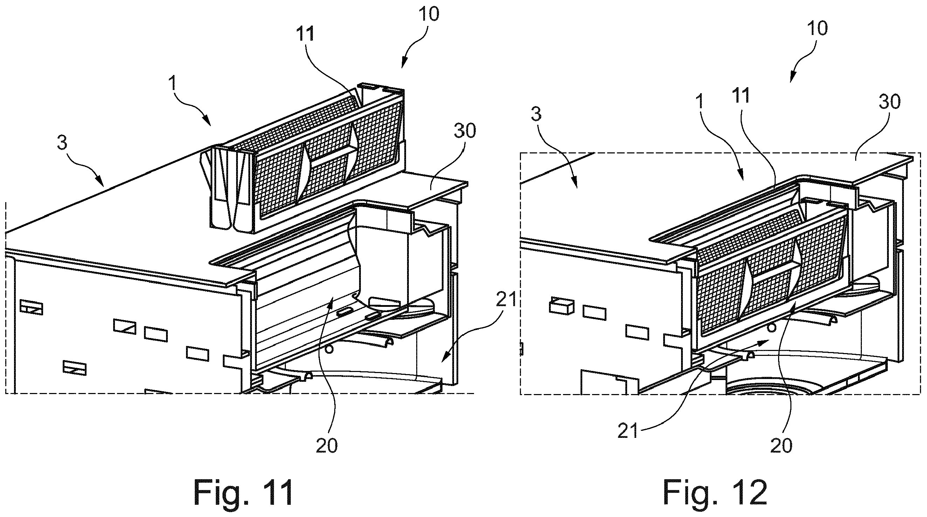

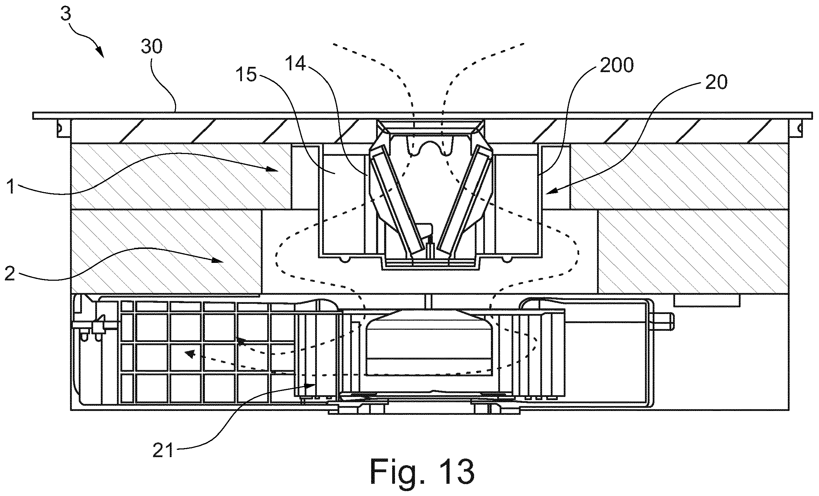

In den Figuren 11 bis 15 ist das Einführen des Trägerrahmens 10 mit den Filterelementen 11 erneut gezeigt. Figur 13 zeigt den eingebrachten Zustand, bei dem die Filterelement 11 auseinander geschwenkt sind. Zu den Filterelementen 11 benachbart sind Geruchsfilter 15 in dem Gerätegehäuse 20 gehalten und liegen in der gezeigten Ausführungsform an einem Geruchsfiltergitter 200 an.

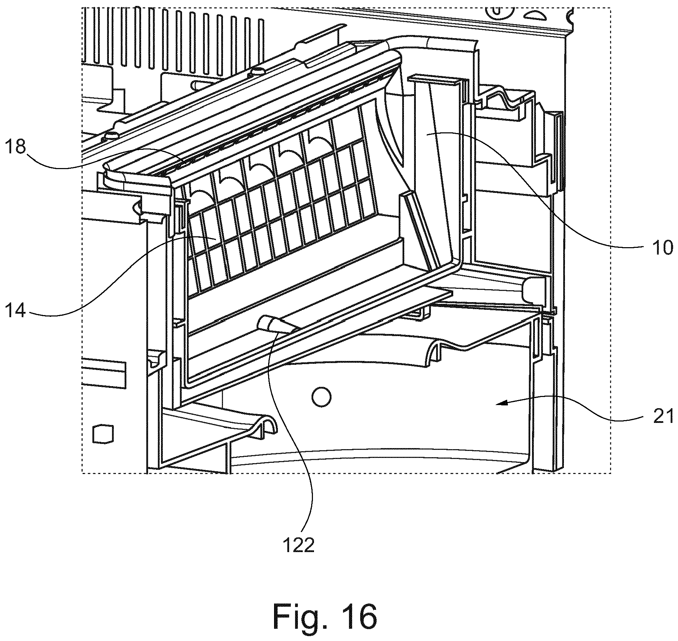

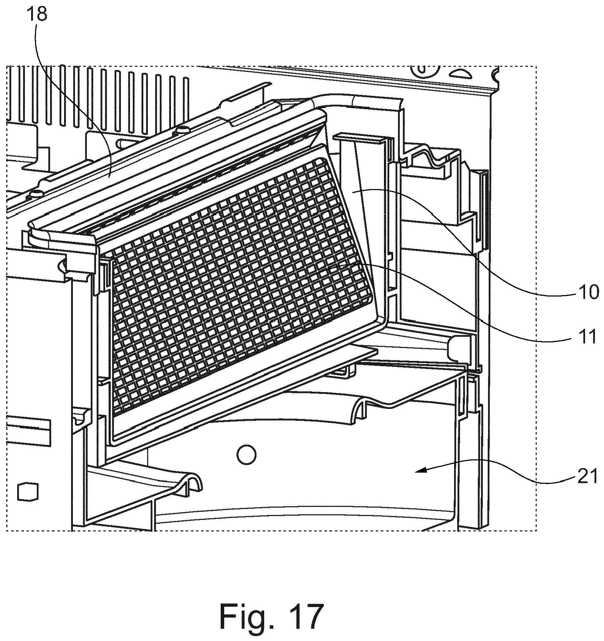

Wie sich aus Figuren 14 und 15 ergibt, liegt das Filterelement 11 in dem aufgeklappten Zustand im unteren Bereich an der Seite mit der Außenseite an dem Anschlag 102 an. Der obere Bereich des Filterelementes 11, der über den Anschlag 102 hinausragt, liegt an einer rahmenförmigen Ausbuchtung, die auch als Abbug 140 bezeichnet werden kann, des Filtergehäuses 14 an. Somit liegt die gesamte äußere Seite des Rahmens 110 des Filterelementes 11 an einer Kontaktfläche 124 an. An dieser Kontaktfläche 124 kann eine Dichtung vorgesehen sein. Besonders bevorzugt liegt auch der obere Rand des Rahmens 110 an der Außenseite an einer Kontaktfläche 124 an. Insbesondere kann die obere Kontaktfläche durch eine Fläche der Filterabdeckung 18 gebildet werden. In Figur 16 ist die Kontaktfläche 124, über die die Außenseite des Rahmens 110 des Filterelementes 11 mit dem Trägerrahmen 10, dem Filtergehäuse 14 und der Filterabdeckung 18 in Kontakt steht gezeigt. Figur 17 zeigt die Ansicht aus Figur 16 mit eingebrachtem Filterelement 11.

Mit der vorliegenden Erfindung kann eine Reihe von Vorteilen erzielt werden. Insbesondere kann mit Positionierelementen, die Laschen oder einen Gleitvorsprung darstellen, ein falsches Montieren verhindert werden (Poka Yoke). Zudem wird die Ausrichtung der Filterelementen in dem Trägerrahmen bei diesen Positionierelementen geführt. Bei der Ausführungsform, bei der das Positionierelement einen Magneten darstellt, kann das Aufklappen und Zuklappen der Filterelement unterstützt werden und die Filter in dem aufgeklappten und dem zugeklappten Zustand gehalten werden. Zudem kann eine Luftdichtigkeit zwischen dem Filterelement und dem Filtergehäuse, Trägerrahmen sowie gegebenenfalls einer Filterabdeckung gewährleistet werden. Zudem können die Filterelemente und der Trägerrahmen aus der Dunstabzugsvorrichtung entnommen und gereinigt werden. Vorzugsweise können die Filterelement von dem Trägerrahmen gelöst werden und somit separat zu dem Trägerrahmen gereinigt werden oder bei Beschädigung eines Filterelementes durch Ersatzteile ausgetauscht werden.

### Bezugszeichenliste

- 1: Filtereinheit
- 10: Trägerrahmen
- 100: Seitenwand
- 101: Boden
- 1010: Halteschiene
- 102: Anschlag
- 11: Filterelement
- 110: Rahmen
- 111: Stützstrebe
- 112: Querstrebe
- 113: Kontaktfläche

- 12: Positionierelement
- 120: Magnet
- 1200: Magnet an Trägerrahmen
- 1201: Magnet an Gerätegehäuse
- 122: Gleitvorsprung
- 123: Lasche
- 124: Kontaktfläche
- 125: Stift
- 126: magnetisierbares Element
- 127: Einbuchtung

- 14: Filtergehäuse
- 140: Abbug
- 15: Geruchsfilter
- 16: Schutzgitter
- 17: Ansaugöffnung
- 18: Filterabdeckung

- 2: Dunstabzugsvorrichtung
- 20: Gerätegehäuse
- 200: Geruchsfiltergitter
- 21: Lüftergehäuse

- 3: Kochfeld
- 30: Abdeckplatte
- 300: Aussparung

## Patentansprüche

1. Filtereinheit für eine Dunstabzugsvorrichtung, die zwei Filterelemente (11) und mindestens einen Trägerrahmen (10) für die Filterelement (11) und ein Filtergehäuse (14) aufweist und die Filterelemente (11) in einem spitzen Winkel zueinander angeordnet sind, **dadurch gekennzeichnet, dass** die Filterelemente (11) in dem Trägerrahmen (10) schwenkbar gelagert sind und die Filtereinheit (1) zumindest ein Positionierelement (12) zum Einstellen der Position zumindest eines der Filterelemente (11) in der Filtereinheit (1) aufweist.

2. Filtereinheit gemäß Anspruch 1, **dadurch gekennzeichnet, dass** das mindestens eine Positionierelement (12) zum Bewegen mindestens eines der Filterelemente (11) und/oder zum Fixieren der Position mindestens eines der Filterelemente (11) dient.

3. Filtereinheit gemäß einem der Ansprüche 1 oder 2, **dadurch gekennzeichnet, dass** zumindest eines der Positionierelemente (12) an dem Filterelement (11), and dem Trägerrahmen (10) und / oder an dem Filtergehäuse (14) angeordnet ist.

4. Filtereinheit gemäß einem der Ansprüche 1 bis 3, **dadurch gekennzeichnet, dass** zumindest eines der Positionierelemente (12) einen Magneten (1200, 1201) und zumindest eines der Positionierelemente (12) ein magnetisierbares Element (126) darstellt.

5. Filtereinheit gemäß Anspruch 4, **dadurch gekennzeichnet, dass** an dem Filterelement (11) ein magnetisierbares Element (126) und an dem Trägerrahmen (10) und dem Filtergehäuse (14) jeweils ein Magnet (1200, 1201) angeordnet ist und das magnetisierbare Element (126) im oberen Bereich des Filterelementes (11) angeordnet ist.

6. Filtereinheit gemäß einem der Ansprüche 1 bis 5, **dadurch gekennzeichnet, dass** das mindestens eine Positionierelement (12) ein Gleitvorsprung (122) ist, der am Boden des Trägerrahmens (10) angeordnet ist, sich senkrecht zu der Länge des Trägerrahmens (10) erstreckt und das Filterelement (11) eine Einbuchtung (127) aufweist, in die der Gleitvorsprung (122) eingreift.

7. Filtereinheit gemäß einem der Ansprüche 1 bis 6, **dadurch gekennzeichnet, dass** das Positionierelement (12) zum Auseinanderschwenken der Filterelemente (11) dient und ein Positionierelement (12) eine Lasche (123) an dem Filterelement (11) und ein weiteres Positionierelement (12) einen Stift (125) an dem Filtergehäuse (14) darstellt, der mit der Lasche (123) in Kontakt gebracht werden kann.

8. Filtereinheit nach Anspruch 6, **dadurch gekennzeichnet, dass** sich die Lasche (123) zur schwenkbaren Lagerung des Filterelementes (11) durch einen Schlitz in der Seitenwand (100) des Trägerrahmen (10), der parallel zu der Fläche der Seitenwand (100) liegt, erstreckt.

9. Filtereinheit gemäß einem der Ansprüche 1 bis 8, **dadurch gekennzeichnet, dass** an der Innenseite der Seitenwand (100) mindestens ein Anschlag (102) und ein trapezförmiger Vorsprung gebildet ist, zwischen denen eine Einführschiene zum Einschieben des Filterelementes (11) von oben gebildet ist.

10. Dunstabzugsvorrichtung mit einer Filterelement, **dadurch gekennzeichnet, dass** die Filtereinheit (1) eine Filtereinheit (1) nach einem der Ansprüche 1 bis 9 darstellt.
